# EUROPEAN PATENT APPLICATION

(11) **EP 4 617 394 A1**
(43) Date of publication of application: **17.09.2025**
(21) Application number: 23888972.9
(22) Date of filing: 20.10.2023
(51) Int. Cl.: C22C 38/02, C22C 38/06, C22C 38/00, C22C 38/14, C21D 8/12, B21C 47/02, H01F 1/147

(54) **METHOD FOR MANUFACTURING NON-ORIENTED ELECTRICAL STEEL SHEET WITH EXCELLENT MAGNETIC PROPERTIES, AND NON-ORIENTED ELECTRICAL STEEL SHEET MANUFACTURED THEREBY**

(30) Priority: 10.11.2022 KR 20220149172
(71) Applicant: Hyundai Steel Company, Incheon 22525 (KR)
(72) Inventor: AHN, Yong Keun, Incheon 22525 (KR); YOO, Seong Hyeon, Incheon 22525 (KR)
(74) Representative: Viering, Jentschura & Partner mbB Patent- und Rechtsanwälte
(86) International application number: PCT/KR2023/016326
(87) International publication number: WO 2024/101709

(57) **Abstract**

Disclosed is an invention concerning a method for manufacturing non-oriented electrical steel sheets with excellent magnetic properties and the non-oriented electrical steel sheets produced thereby. In a specific embodiment, the method for manufacturing non-oriented electrical steel sheets with excellent magnetic properties includes the steps of: manufacturing a hot-rolled steel sheet using a slab containing 0.4-3.5 wt% of silicon (Si), 0 (exclusive) to 0.05 wt% (inclusive) of aluminum (Al), 0.002-3.5 wt% of austenite stabilizing elements, and the balance of iron (Fe) and other inevitable impurities; cold rolling the hot-rolled steel sheet to prepare a cold-rolled steel sheet; and cold-annealing the cold-rolled steel sheet, wherein the cold-annealing includes a primary heat treatment step of heating and maintaining the cold-rolled steel sheet up to the temperature of the austenite single-phase region; and a secondary heat treatment step of cooling and maintaining the primary heat-treated cold-rolled steel sheet down to the temperature of the ferrite and austenite dual-phase region.

## Description

### [Technical Field]

The present invention relates to a method for manufacturing a non-oriented electrical steel sheet having excellent magnetic properties and a non-oriented electrical steel sheet manufactured thereby.

### [Background Art]

Electrical steel sheets may be divided into grain-oriented electrical steel sheets used for transformers and non-oriented electrical steel sheets used for rotating motor cores. Recently, interest in environmentally friendly products has increased along with global environmental issues, and in particular, the paradigm of the automobile industry has shifted to reduce the production of internal combustion engine vehicles and increase the production of electric vehicles. As the demand for electric vehicles has increased, high-efficiency and high-output products have also been required for electrical steel sheets, a key component.

For electrical steel sheets, two characteristics are important: magnetic flux density and iron loss. For the magnetic flux density, which indicates the number of magnetic lines of force induced in a material under a specific magnetic field, the B50 value induced under a magnetic field of 5,000 A/m is generally evaluated and the unit is Tesla. Factors that can improve the magnetic flux density include chemical composition, grain size, and texture. Iron loss is the energy loss that occurs during the magnetization of electrical steel sheet material, and the unit is W/kg. Iron loss is divided into hysteresis loss caused by the magnetization phenomenon itself and eddy current loss formed by the eddy current induced during magnetization. In order to reduce the iron loss of electrical steel sheets, a method of increasing the resistivity by adding elements such as Si, Mn, and Al, which are major alloying elements, or a method of thinning the material is used. However, as the amount of alloying elements added increases, the magnetic flux density decreases and the rolling properties decrease, making it difficult to thin the steel sheet. In addition, the main alloying elements easily combine with impurity elements such as C, S, N, and Ti to form precipitates, and the formed precipitates act as a major cause that deteriorates the magnetic properties by hindering the movement of magnetic domains formed by the applied magnetic field. In order to improve the properties of such electrical steel sheets, optimization of alloying elements and impurity elements is very important, and the properties can also be improved by improving the microstructure and texture that can affect the magnetic flux density and hysteresis loss.

Currently, electrical steel sheets are manufactured through the process of steelmaking-continuous casting-hot rolling-annealing and pickling line (APL)-cold rolling-annealing and coating line (ACL). However, with the currently known process and composition, the effect of improving the properties by improving the microstructure and texture is insignificant, and in particular, it is even more difficult to achieve a clear improvement in the texture, which has a significant effect on the magnetic properties, by only adding elements or improving some process conditions.

Background art related to the present invention is disclosed in Korean Patent No. 10-2325011 (published on November 11, 2021, entitled "NON-ORIENTED ELECTRICAL STEEL SHEET AND METHOD FOR MANUFACTURING THE SAME").

### [Disclosure]

### [Technical Problem]

According to one embodiment of the present invention, there is provided a method for manufacturing a non-oriented electrical steel sheet, which has an excellent effect of improving microstructure and texture, minimizes iron loss, and has excellent magnetic properties.

According to another embodiment of the present invention, there is provided a method for manufacturing a non-oriented electrical steel sheet having an excellent effect of developing a texture favorable to magnetism.

According to still another embodiment of the present invention, there is provided a method for manufacturing a non-oriented electrical steel sheet having excellent mechanical properties.

According to yet another embodiment of the present invention, there is provided a method for manufacturing a non-oriented electrical steel sheet having excellent productivity and economic efficiency.

According to still yet another embodiment of the present invention, there is provided a non-oriented electrical steel sheet manufactured by the method for manufacturing a non-oriented electrical steel sheet.

### [Technical Solution]

One aspect of the present invention relates to a method for manufacturing a non-oriented electrical steel sheet having excellent magnetic properties. In one embodiment, the method for manufacturing a non-oriented electrical steel sheet includes steps of: manufacturing a hot-rolled steel sheet from a slab comprising 0.4 to 3.5 wt% of silicon (Si), more than 0 to 0.05 wt% or less of aluminum (Al), 0.002 to 3.5 wt% of austenite stabilizing elements, and the balance of iron (Fe) and other inevitable impurities; cold-rolling the hot-rolled steel sheet, thereby manufacturing a cold-rolled steel sheet; and annealing the cold-rolled steel sheet, wherein the step of annealing the cold-rolled steel sheet includes: a step of subjecting the cold-rolled steel sheet to first heat treatment by heating to an austenite single-phase region temperature and maintaining at the temperature; and a step of subjecting the cold-rolled steel sheet, subjected to the first heat treatment, to second heat treatment by cooling to a ferrite/austenite dual-phase region temperature and maintaining at the temperature.

In one embodiment, the slab may further include at least one of carbon (C): more than 0 to 0.0050 wt% or less, sulfur (S): more than 0 to 0.0050 wt% or less, nitrogen (N): more than 0 to 0.0050 wt% or less, and titanium (Ti): more than 0 to 0.0050 wt% or less, based on the total weight.

In one embodiment, the hot-rolled steel sheet may be manufactured through steps of: reheating the slab at a reheating temperature of 1,110 to 1,180°C; hot-rolling the reheated slab at a finish rolling temperature of 800 to 900°C; and coiling the hot-rolled slab at a coiling temperature of 500 to 700°C.

In one embodiment, the method for manufacturing a non-oriented electrical steel sheet may further include, before the step of cold-rolling the hot-rolled steel sheet, a step of annealing the hot-rolled steel sheet, wherein the step of annealing the hot-rolled steel sheet may include: a step of heating the hot-rolled steel sheet to a temperature of 940 to 1,110°C and maintaining the same at the temperature; and a step of cooling the hot-rolled steel sheet.

In one embodiment, the step of annealing the hot-rolled steel sheet may be performed by heating the hot-rolled steel sheet at a heating rate of 20°C/s or higher and cooling the same at a cooling rate of 20°C/s or higher.

In one embodiment, the cold rolling is performed at a reduction ratio of 50 to 90%, and the cold-rolled steel sheet may have a thickness of 0.1 to 0.5 mm.

In one embodiment, the first heat treatment may include a step of heating the cold-rolled steel sheet to a temperature of 1,000 to 1,250°C and maintaining the same at the temperature for 30 to 300 seconds, and the second heat treatment may include a step of cooling the cold-rolled steel sheet, subjected to the first heat treatment, to a ferrite/austenite dual-phase region temperature and maintaining the same at the temperature for 5 to 300 seconds.

In one embodiment, the second heat treatment may be performed by cooling the cold-rolled steel sheet, subjected to the first heat treatment, at a cooling rate of 10°C/s or higher.

Another aspect of the present invention relates to a non-oriented electrical steel sheet manufactured by the above method for manufacturing a non-oriented electrical steel sheet. In one embodiment, the non-oriented electrical steel sheet comprises 0.4 to 3.5 wt% of silicon (Si), more than 0 to 0.05 wt% or less of aluminum (Al), 0.002 to 3.5 wt% of austenite stabilizing elements, and the balance of iron (Fe) and other inevitable impurities, and the microstructure of the non-oriented electrical steel sheet includes ferrite.

In one embodiment, the non-oriented electrical steel sheet may further include at least one of carbon (C): more than 0 to 0.0050 wt% or less, sulfur (S): more than 0 to 0.0050 wt% or less, nitrogen (N): more than 0 to 0.0050 wt% or less, and titanium (Ti): more than 0 to 0.0050 wt% or less, based on the total weight.

In one embodiment, the non-oriented electrical steel sheet may have a thickness of 0.1 to 0.5 mm, a magnetic flux density (B₅₀) of 1.65 T or more, an iron loss (W_{15/50}) of 2.42 W/kg or less, a yield strength of 200 MPa or more, and a tensile strength of 300 MPa or more.

In one embodiment, the non-oriented electrical steel sheet may include 15 area% or more of a <100>//ND texture.

### [Advantageous Effects]

The method for manufacturing a non-oriented electrical steel sheet according to the present invention and the non-oriented electrical steel sheet manufactured thereby have an excellent effect of improving microstructure and texture, minimize iron loss, have excellent magnetic properties, have an excellent effect of developing a texture favorable to magnetism, have excellent mechanical properties such as yield strength and tensile strength, and may have excellent productivity and economic efficiency.

### [Description of Drawings]

FIG. 1 shows a method for manufacturing a non-oriented electrical steel sheet according to one embodiment of the present invention.
FIG. 2 illustrates a graph showing heat treatment schedules during annealing of cold-rolled steel sheets of examples and comparative examples.

### [Best Mode]

Hereinafter, the present invention will be described in detail. In the following description, the detailed description of related publicly-known technology or configuration will be omitted when it may unnecessarily obscure the subject matter of the present invention.

In addition, the terms used in the following description are terms defined taking into consideration the functions obtained in accordance with embodiments of the present disclosure, and may be changed in accordance with the option of a user or operator or a usual practice. Accordingly, the definition of the terms should be made based on the contents throughout the present specification.

### Method for manufacturing non-oriented electrical steel sheet having excellent magnetic properties

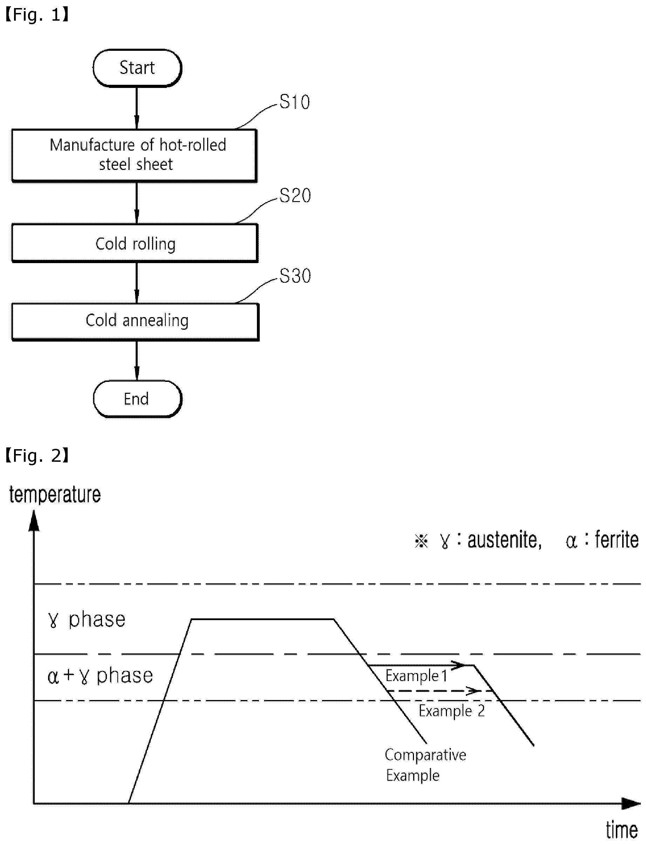

One aspect of the present invention relates to a method for manufacturing a non-oriented electrical steel sheet having excellent magnetic properties. FIG. 1 shows a method for manufacturing a non-oriented electrical steel sheet according to one embodiment of the present invention. Referring to FIG. 1, the method for manufacturing a non-oriented electrical steel sheet includes step (S10) of manufacturing a hot-rolled steel sheet; step (S20) of cold rolling; and step (S30) of annealing the cold-rolled steel sheet.

More specifically, the method for manufacturing the non-oriented electrical steel sheet includes: step (S10) of manufacturing a hot-rolled steel sheet from a slab comprising 0.4 to 3.5 wt% of silicon (Si), more than 0 to 0.05 wt% or less of aluminum (Al), 0.002 to 3.5 wt% of austenite stabilizing elements, and the balance of iron (Fe) and other inevitable impurities; step (S20) of cold-rolling the hot-rolled steel sheet, thereby manufacturing a cold-rolled steel sheet; and step (S30) of annealing the cold-rolled steel sheet.

Hereinafter, each step of the method for manufacturing a non-oriented electrical steel sheet according to the present invention will be described in detail.

### (S10) Step of manufacturing hot-rolled steel sheet

This step is a step of manufacturing a hot-rolled steel sheet from a slab comprising 0.4 to 3.5 wt% of silicon (Si), more than 0 to 0.05 wt% or less of aluminum (Al), 0.002 to 3.5 wt% of austenite stabilizing elements, and the balance of iron (Fe) and other inevitable impurities.

Hereinafter, the components of the slab will be described in detail.

### Silicon (Si)

The silicon (Si) is added as a component to reduce the iron loss (eddy current loss) by increasing the resistivity of the material.

In one embodiment, the silicon is contained in an amount of 0.4 to 3.5 wt% based on the total weight of the slab. If the silicon is contained in an amount of less than 0.4 wt%, the effect of reducing the iron loss will be insufficient, and if the silicon is contained in an amount of more than 3.5 wt%, the magnetic flux density may decrease due to an increase in the alloying element component, and the brittleness may increase, which lowers the cold-rolling property, resulting in a decrease in productivity.

### Aluminum (Al)

The aluminum (Al) is a major additive element that reduces the iron loss (eddy current loss) by increasing the resistivity together with the silicon. The aluminum may also act as a ferrite stabilizing element.

In one embodiment, the aluminum (Al) is contained in an amount of more than 0 to 0.05 wt% or less based on the total weight of the slab. If the aluminum is contained in an amount of more than 0.05 wt%, the aluminum may reduce the phase transformation region and form a secondary phase such as AlN, thereby deteriorating the magnetic properties.

### Austenite stabilizing elements

The austenite stabilizing elements may be added to ensure the austenite transformation region at high temperatures. If the silicon is added in an amount of about 1.7 wt% or more to reduce the iron loss of the steel sheet, a problem may arise in that only a ferrite single-phase region exists and thus transformation into austenite does not occur. For this reason, in the present invention, the austenite stabilizing elements may be added in order to ensure the austenite transformation region at high temperatures.

In one embodiment, the austenite stabilizing elements are contained in an amount of 0.002 to 3.5 wt% based on the total weight of the slab. If the austenite stabilizing elements are contained in an amount of less than 0.002 wt%, the austenite transformation region may not be ensured, and if the austenite stabilizing elements are contained in an amount of more than 3.5 wt%, the production cost may increase excessively and the magnetism may be reduced rather than being increased.

In one embodiment, the austenite stabilizing elements may include manganese (Mn), cobalt (Co), nickel (Ni), and chromium (Cr). These may be contained alone or in combination of two or more.

In one embodiment, the slab may further comprise at least one of carbon (C): more than 0 to 0.0050 wt% or less, sulfur (S): more than 0 to 0.0050 wt% or less, nitrogen (N): more than 0 to 0.0050 wt% or less, and titanium (Ti): more than 0 to 0.0050 wt% or less, based on the total weight.

### Carbon (C)

The carbon is an element that may ensure the austenite phase transformation region, but increases the iron loss by forming carbides such as TiC and NbC, and the smaller the amount added, the better.

In one embodiment, the carbon may be contained in an amount of more than 0 to 0.0050 wt% or less based on the total weight of the slab. When the carbon is contained in an amount within the above content range, the austenite phase transformation region may be ensured while preventing an increase in the iron loss. For example, the carbon may be contained in an amount of more than 0 to 0.0030 wt% or less.

### Sulfur (S)

The sulfur (S) may be added in as small an amount as possible because it forms precipitates such as MnS and CuS, thereby increasing the iron loss and inhibiting grain growth.

In one embodiment, the sulfur (S) may be contained in an amount of more than 0 to 0.0050 wt% or less based on the total weight of the slab. When the sulfur is contained in an amount within the above content range, the formation of precipitates such as MnS and CuS may be prevented, thereby preventing an increase in the iron loss, and grain growth may not be inhibited. For example, the sulfur may be contained in an amount of more than 0 to 0.0030 wt% or less.

### Nitrogen (N)

The nitrogen (N) may be added in added in as small an amount as possible because it forms precipitates such as AlN, TiN, and NbN, thereby increasing the iron loss and inhibiting grain growth.

In one embodiment, the nitrogen (N) may be contained in an amount of more than 0 to 0.0050 wt% or less based on the total weight of the slab. When the nitrogen is contained in an amount within the above content range, the formation of precipitates such as AlN, TiN, and NbN may be prevented, thereby preventing an increase in the iron loss, and grain growth may not be inhibited. For example, the nitrogen may be contained in an amount of more than 0 to 0.0030 wt% or less.

### Titanium (Ti)

The titanium (Ti) forms fine precipitates such as TiC and TiN, thereby inhibiting grain growth. Since the magnetic properties deteriorate as titanium is added, the titanium may be added in added in as small an amount as possible.

In one embodiment, the titanium (Ti) may be contained in an amount of more than 0 to 0.0050 wt% or less based on the total weight of the slab. When the titanium is contained in an amount within the above content range, the formation of fine precipitates such as TiC and TiN may be prevented, so that the magnetic properties may not be inhibited while grain growth is not inhibited. For example, the titanium (Ti) may be contained in an amount of more than 0 to 0.0030 wt% or less.

In one embodiment, the hot-rolled steel sheet may be manufactured through steps of: reheating the slab at a reheating temperature of 1,110 to 1,180°C; hot-rolling the reheated slab at a finish rolling temperature of 800 to 900°C; and coiling the hot-rolled slab at a coiling temperature of 500 to 700°C.

When the slab is reheated under the above reheating temperature condition, the re-dissolution of precipitates formed by carbon, sulfur, and nitrogen within the slab may be prevented, thereby preventing the formation of fine precipitates in the subsequent rolling and annealing processes, the rolling load may be reduced, and at the same time, magnetism may be easily ensured without inhibiting grain growth.

When the hot rolling is performed under the above finish rolling temperature condition, the property variation of the electrical steel sheet may be reduced, and the electrical steel sheet may have excellent mechanical properties and magnetic properties.

When the coiling is performed under the above coiling temperature condition, the electrical steel sheet may have excellent surface quality, mechanical properties and magnetic properties.

In one embodiment, the hot-rolled steel sheet may have a thickness of 1.6 to 2.6 mm. Under this thickness condition, an increase in the reduction ratio during cold rolling may be prevented, thereby preventing deterioration in the texture and improving the magnetic properties of the electrical steel sheet.

### Step (S11) of annealing hot-rolled steel sheet

In one embodiment, the method for manufacturing a non-oriented electrical steel sheet may further include, before the step of cold-rolling the hot-rolled steel sheet, step (S11) of annealing the hot-rolled steel sheet.

The step of annealing the hot-rolled steel sheet may include: a step of heating the hot-rolled steel sheet to a temperature of 940 to 1,110°C and maintaining the same at the temperature; and a step of cooling the hot-rolled steel sheet.

When the hot-rolled steel sheet is heated to the above annealing temperature, a uniform microstructure may be formed by removing the elongated cast structure.

However, if the annealing temperature is excessively low, the elongated cast structure remaining after hot rolling may remain, causing microstructure inhomogeneity and forming small grains, which may act as a hindrance to cold rolling. On the other hand, if the annealing temperature is excessively high, it may cause an imbalance in the final product's texture, which may cause anisotropy of the properties. For example, the annealing of the hot-rolled steel sheet may be performed by heating the hot-rolled steel sheet to a temperature of 940 to 1,110°C and maintaining the same at the temperature for 30 to 120 seconds. At the annealing time, grains with an appropriate size may be formed, so that the electrical steel sheet may have excellent magnetic properties.

In one embodiment, the annealing of the hot-rolled steel sheet may include heating the hot-rolled steel sheet at a heating rate of 20°C/s or higher. Under this condition, grains with an appropriate size may be formed, and the electrical steel sheet may have excellent magnetic properties.

In one embodiment, the annealing of the hot-rolled steel sheet may include heating the hot-rolled steel sheet and maintaining the same at the temperature , and then cooling the same at a cooling rate of 20°C/s or higher. Under the above conditions, grains with an appropriate size may be formed, and the electrical steel sheet may have excellent magnetic properties. For example, the hot-rolled steel sheet may be cooled to room temperature under the above cooling rate condition.

### Step (S20) of cold rolling

This step is a step of cold-rolling the hot-rolled steel sheet, thereby manufacturing a cold-rolled steel sheet. For example, the hot-rolled steel sheet may be pickled and then cold rolled.

In one embodiment, the temperature of the hot-rolled steel sheet may be increased to 75 to 200°C to facilitate the cold rolling.

In one embodiment, the cold rolling may be performed at a reduction ratio (final reduction ratio) of 50 to 90%. Under this condition, the electrical steel sheet may have excellent magnetic properties while equipment load is reduced.

In one embodiment, the cold-rolled steel sheet may have a thickness of 0.1 to 0.5 mm. Under this condition, the electrical steel sheet may have excellent magnetic properties and mechanical properties.

### Step (S30) of annealing cold-rolled steel sheet

This step is a step of annealing the cold-rolled steel sheet.

In one embodiment, the step of annealing the cold-rolled steel sheet includes: step (S31) of subjecting the cold-rolled steel sheet to first heat treatment by heating to an austenite single-phase region temperature and maintaining at the temperature; and step (S32) of subjecting the cold-rolled steel sheet, subjected to the first heat treatment, to second heat treatment by cooling to a ferrite/austenite dual-phase region temperature and maintaining at the temperature.

In a conventional art, in order to improve the magnetic properties of a non-oriented electrical steel sheet by improving the texture, a heat treatment method based on the phase transformation from the austenite phase (γ) to the ferrite phase (α) was selected to induce the development of the {100}//ND plane, but there was a disadvantage in that production time and cost increased because second rolling for surface modification was performed after first rolling, and second heat treatment was required thereafter to remove residual stress.

In another conventional art, a method was used in which a non-oriented electrical steel sheet was manufactured based on heat treatment in the ferrite (α) single-phase region without performing phase transformation, and in which a decomposition reaction of MnS precipitates was induced by controlling the sulfur (S) content to an extremely low level and segregation of the decomposed S in the grains was induced so that the growth of the {100}//ND plane could be induced. However, in this case, there was a disadvantage in that production time and cost increased because a high temperature condition of 1,200°C or higher and heat treatment for a long time of at least 12 hours were required.

In one embodiment, the first heat treatment may include a step of heating the cold-rolled steel sheet to a temperature of 1,000 to 1,250°C and maintaining the same at the temperature for 30 to 300 seconds. Under these conditions, the microstructure of the cold-rolled steel sheet may be easily transformed into the austenite phase single-phase region during the first heat treatment.

In one embodiment, the second heat treatment may include a step of cooling the cold-rolled steel sheet, subjected to the first heat treatment, to a ferrite/austenite dual-phase region temperature and maintaining the same at the temperature for 5 to 300 seconds. For example, the second heat treatment may be performed by cooling to 700 to 980°C. Under these conditions, nucleation of the ferrite phase may easily occur during the second heat treatment, so that transformation into austenite and ferrite microstructures may easily occur, so that the {100}//ND orientation fraction that is favorable to magnetism may increase and the orientation fraction that is relatively unfavorable to magnetism may decrease, and thus the electrical steel sheet may have excellent magnetic properties. For example, the second heat treatment may include a step of cooling the cold-rolled steel sheet to a ferrite/austenite dual-phase region temperature and maintaining the same at the temperature for 10 to 100 seconds.

For example, the second heat treatment may be performed by cooling the cold-rolled steel sheet, subjected to the first heat treatment, at a cooling rate of 10°C/s or higher.

In one embodiment, after the second heat treatment, the cold-rolled steel sheet subjected to the second heat treatment may be cooled at a cooling rate of 10°C/s or higher.

In one embodiment, the method may further include a step of forming a coating layer on the surface of the annealed cold-rolled steel sheet. The coating layer may be formed for the purpose of ensuring insulation and improving punchability.

In the present invention, based on heat treatment for phase transformation, the present inventors sought to maximize the effect of improving the texture by utilizing the fact that the orientation that is preferentially formed varies depending on each temperature condition when phase transformation into the ferrite phase (α) progresses.

In addition, the composition of the non-oriented electrical steel sheet contained 0.4 to 3.5 wt% of silicon (Si) as a major additive element. As the content of silicon, a ferrite phase (α) stabilizing element, increases, the austenite phase transformation region disappears, and thus the content of austenite phase (γ) stabilizing elements was set to 0.002 to 3.5 wt% in proportion to the content of silicon (Si) to enable phase transformation heat treatment. Since the present invention is based on the phase transformation from the austenite phase (γ) to the ferrite phase (a), the austenite phase (γ) stabilizing elements were added in proportion to the increase in the amount of Si added, thereby enabling phase transformation.

Among the added elements, aluminum (Al) combines with nitrogen (N) to form AlN, which is unfavorable to magnetism, thereby inhibiting the magnetic properties. In addition, like silicon (Si), aluminum acts as a ferrite phase (α) stabilizing element, and thus it was set to more than 0 to 0.05 wt% or less to minimize the amount thereof added.

Meanwhile, in previous studies, since it was not known which orientation is preferentially formed depending on temperature change during phase transformation and there was no purpose of applying the same, a method was chosen in which the temperature is lowered through continuous cooling after increasing and maintaining the temperature during annealing of the cold-rolled steel sheet.

However, in the present invention, after making a single phase by maintaining the cold-rolled steel sheet at the austenite phase (γ) temperature for a certain period of time during annealing of the cold-rolled steel sheet, the present inventors sought to confirm which orientations are preferentially formed at each temperature where the austenite phase (γ) and the ferrite phase (α) coexist, and to apply the advantage.

### Non-oriented electrical steel sheet manufactured by the method for manufacturing non-oriented electrical steel sheet

Another aspect of the present invention relates to a non-oriented electrical steel sheet manufactured by the above-described method for manufacturing a non-oriented electrical steel sheet. In one embodiment, the non-oriented electrical steel sheet comprises 0.4 to 3.5 wt% of silicon (Si), more than 0 to 0.05 wt% or less of aluminum (Al), 0.002 to 3.5 wt% of austenite stabilizing elements, and the balance of iron (Fe) and other inevitable impurities, and the microstructure of the non-oriented electrical steel sheet includes ferrite.

In one embodiment, the austenite stabilizing elements may include manganese (Mn), cobalt (Co), nickel (Ni), and chromium (Cr). These may be included alone or in combination of two or more.

The alloying elements of the non-oriented electrical steel sheet and the contents thereof may be the same as those of the above-mentioned slab.

In one embodiment, the non-oriented electrical steel sheet may further comprise at least one of carbon (C): more than 0 to 0.0050 wt% or less, sulfur (S): more than 0 to 0.0050 wt% or less, nitrogen (N): more than 0 to 0.0050 wt% or less, and titanium (Ti): more than 0 to 0.0050 wt% or less, based on the total weight.

In one embodiment, the non-oriented electrical steel sheet may have a thickness of 0.1 to 0.5 mm.

In one embodiment, the non-oriented electrical steel sheet may further include a coating layer formed on the surface thereof. When the coating layer is formed, it may have excellent effects of ensuring insulation and improving punchability.

In one embodiment, the non-oriented electrical steel sheet may have a magnetic flux density (B₅₀) of 1.65 T or more and an iron loss (W_{15/50}) of 2.42 W/kg or less. Under the above conditions, the magnetic properties may be excellent.

The magnetic flux density (B₅₀) may be measured by applying a magnetic field of 5,000 A/m to the electrical steel sheet.

The iron loss (W_{15/50}) may be measured by applying a magnetic flux density of 1.5 Tesla at a frequency of 50 Hz to the electrical steel sheet.

For example, the non-oriented electrical steel sheet may have a magnetic flux density (B₅₀) of 1.65 to 1.70 T and an iron loss (W_{15/50}) of 2.28 to 2.42 W/kg.

In one embodiment, the non-oriented electrical steel sheet may have a yield strength of 200 MPa or more and a tensile strength of 300 MPa or more.

In one embodiment, the non-oriented electrical steel sheet may comprise 15 area% or more of a <100>//ND texture. For example, the non-oriented electrical steel sheet may comprise 15 to 40 area% of a <100>//ND texture. In another example, the non-oriented electrical steel sheet may comprise 30 to 35 area% of a <100>//ND texture. Under this condition, the magnetic strength may be excellent.

The <100>//ND texture refers to a texture in which the <100> plane is parallel to the normal direction (ND) with respect to the surface of the non-oriented electrical steel sheet. The surface of the non-oriented electrical steel sheet may refer to the xy plane, wherein the x-axis refers to the rolling direction (RD direction) of the steel sheet and the y-axis refers to the transverse direction (TD direction) of the steel sheet.

The texture of the non-oriented electrical steel sheet may be analyzed by using the orientation distribution function (ODF) for the surface strength in each orientation using electron backscatter diffraction (EBSD) based on the ND direction crystal orientation under the rolling (R), transverse (T), and normal (N) conditions of the surface of the steel sheet.

### [Mode for Invention]

Hereinafter, the configuration and effects of the present invention will be described in more detail by way of preferred examples. However, these examples are presented as preferred examples of the present invention and may not be construed as limiting the scope of the present disclosure in any way.

### Example 1

(1) Manufacturing of hot-rolled steel sheet: A slab comprising 1.97 wt% of silicon (Si), 1.0 wt% of nickel (Ni), more than 0 to 0.05 wt% or less of aluminum (Al), 0.0040 wt% (40 ppm) of carbon (C), 0.0040 wt% (40 ppm) of sulfur (S), 0.0015 wt% (15 ppm) of nitrogen (N), and 0.0012 wt% (12 ppm) of titanium (Ti), with the remainder being iron (Fe) and other inevitable impurities, was prepared. The slab having the above alloy composition ensured a stable austenite phase (γ) region under a temperature condition of 1,100°C. Then, the slab was reheated at a slab reheating temperature (SRT) of 1,170°C for 2 hours, hot-rolled at a finish rolling temperature of 850°C, and then cooled and coiled at a coiling temperature of 600°C, thereby manufacturing a hot-rolled steel sheet with a thickness of 2.0 mm.
(2) Hot-rolled steel sheet annealing and cold rolling: Thereafter, the hot-rolled steel sheet was annealed by heating to 975°C at a heating rate of 20°C/s or higher, maintaining at that temperature for 60 seconds, and then cooling to room temperature at a cooling rate of 20°C/s or higher. Thereafter, the hot-rolled steel sheet was pickled and cold-rolled, thereby manufacturing a cold-rolled steel sheet with a thickness of 0.35 mm.
(3) Cold-rolled steel sheet annealing: Thereafter, the cold-rolled steel sheet was subjected to first heat treatment by heating to 1,100°C at a heating rate of 20°C/s or higher and maintaining at that temperature for 60 seconds. The cold-rolled steel sheet subjected to the first heat treatment was subjected to second heat treatment by cooling to 950°C at a cooling rate of 10°C/s or higher and maintaining at that temperature for 60 seconds. Then, the cold-rolled steel sheet subjected to the second heat treatment was cooled to room temperature at a cooling rate of 10°C/s or higher, as shown in FIG. 2, thereby manufacturing a non-oriented electrical steel sheet.

### Example 2

A non-oriented electrical steel sheet was manufactured in the same manner as in Example 1, except that the cold-rolled steel sheet subjected to the first heat treatment was subjected to second heat treatment by cooling to 800°C at a cooling rate of 10°C/s or higher and maintaining at that temperature for 60 seconds, as shown in FIG. 2.

### Comparative Example

A non-oriented electrical steel sheet was manufactured in the same manner as in Example 1, except that the cold-rolled steel sheet subjected to the first heat treatment was cooled to room temperature at a cooling rate of 10°C/s or higher as shown in FIG. 2.

### Experimental Example

(1) XRD analysis: The XRD of each of the cold-rolled steel sheets was measured using an in-situ XRD analysis device at the temperature (950°C or 800°C) cooled during the second heat treatment in Examples 1 and 2, and expressed as the XRD pattern peak intensity ratio (I/Imax). In the case of the Comparative Example, the XRD of the random texture of the cold-rolled steel sheet was measured at the time of cooling to room temperature, and expressed as the XRD peak intensity ratio.

**[Table 1]**

| | XRD measurement temperature (°C) | Peak Intensity Ratio (I/Imax) | | | Remarks |
|---|---|---|---|---|---|
| | | {110} | {200} | {112} | |
| Example 1 | 950 | - | 1 | 0.7 | Ratio value converted after in-situ XRD measurement at 950°C |
| Example 2 | 800 | 0.15 | 0.8 | 1 | Ratio value converted after in-situ XRD measurement at 800°C |
| Comparative Example | Room temperature | 1 | 0.16 | 0.34 | XRD peak intensity ratio of random texture |

Referring to Table 1 above, as a result of XRD analysis of Example 1 in which the cold-rolled steel sheet was heated to and maintained at the austenite phase (γ) temperature during the first heat treatment in the cold-rolled steel sheet annealing process, and then cooled to 950°C during the second heat treatment, it can be confirmed that the peak of {110} did not exist and only the peaks of {200} and {112} existed. In the case of Example 2 which was performed in the same manner as Example 1 except that the hot-rolled steel sheet was cooled to 800°C during the second heat treatment, it can be confirmed that the peaks of {110}, {200}, and {112} were all observed, and compared to the random peak of the Comparative Example, the fraction of the {110} orientation peak was relatively low and the fractions of the {200} and {112} orientation peaks were high.

Taking the results in Table 1 above together, it was experimentally confirmed that the orientation that is preferentially formed varies depending on the temperature condition when the phase transformation from the austenite phase (γ) to the ferrite phase (α) progressed. In addition, it can be confirmed from the results in Table 2 below that the results in Table 1 may be applied to intentionally control the finally formed texture depending on the process conditions.

(2) Analysis of texture and magnetic property measurement of steel sheets: For each of the Examples and the Comparative Example, the texture of the finally manufactured non-oriented electrical steel sheet was analyzed, the magnetic flux density and iron loss were measured, and the results are shown in Table 2 below. The magnetic flux density (B₅₀) was measured by applying a magnetic field of 5,000 A/m to the electrical steel sheet, and the iron loss (W_{15/50}) was measured by applying a magnetic flux density of 1.5 Tesla at a frequency of 50 Hz to the electrical steel sheet.

**[Table 2]**

| Remarks | Texture | | Magnetic properties | |
|---|---|---|---|---|
| | <100>//ND (area%) | <112>//ND (area%) | B₅₀[T] | W_{15/50}[W/kg] |
| Example 1 | 32.6 | 24.3 | 1.68 | 2.36 |
| Example 2 | 19.8 | 36.7 | 1.65 | 2.42 |
| Comparative Example | 12.1 | 56.9 | 1.64 | 2.45 |

Table 2 above shows the results of designing the process using the features in Table 1 and conducting the experiment. In the case of the Comparative Example, the cold-rolled steel sheet was heated to 1,100°C, maintained at that temperature for 60 seconds, and then subjected to furnace cooling, and this can be said to be a general heat treatment cycle rather than one that induces growth under a specific temperature condition.

In the case of Example 1 in which the cold-rolled steel sheet was subjected to first heat treatment by maintaining the same at 1,100°C (at which the austenite phase (γ) is stable) for 60 seconds, and then subjected to second heat treatment by maintaining the same at 950°C (at which only the {200} and {112} peaks of the ferrite phase (α) exist) for 60 seconds to intentionally induce nucleation, and then subjected to furnace cooling, as a result of analyzing the developed texture after cooling to room temperature after the second heat treatment, it could be confirmed that the <100>//ND, an orientation favorable to magnetism, increased to 32.6 area%, and the <112>//ND, an orientation unfavorable to magnetism, decreased to 24.3 area%.

It can be confirmed that, in Example 2 in which the cold-rolled steel sheet was subjected to second heat treatment by cooling to 800°C, the fraction of <100>//ND, which is favorable to magnetism, increased compared to that in the Comparative Example, but was smaller than that in Example 1. In addition, it can be confirmed that the fraction of <112>//ND, which is an orientation unfavorable to magnetism, decreased compared to that in the Comparative Example, but increased compared to that in Example 1.

It can be confirmed that, in the texture of the non-oriented electrical steel sheet of the Comparative Example, the fraction of <100>//ND, an orientation favorable to magnetism, was 12.1 area%, and the fraction of <112>//ND, an orientation unfavorable to magnetism, was as high as 56.9 area%.

Referring to the results in Table 2 above, it could be confirmed that, in Examples 1 to 2 and the Comparative Example, which have the same component composition, only by improving the texture, the magnetic flux density [T] increased from 1.64 (Comparative Example) → 1.65 (Example 2) → 1.68 (Example 1), and the iron loss [W/kg] decreased from 2.45 (Comparative Example) → 2.42 (Example 2) → 2.36 (Example 1).

Taking the results in Table 2 together, it could be confirmed that, by designing a component composition that can be heat-treated for the phase transformation from the austenite phase (γ) to the ferrite phase (α) and setting process conditions that can form orientations favorable to magnetism during phase transformation, it was possible to intentionally increase the orientation favorable to magnetism and decrease the orientation unfavorable to magnetism, thereby ultimately improving the magnetic properties.

Based on the above-described contents, the present inventors designed a heat treatment process that induces nucleation of the <100>//ND orientation by maintaining the cold-rolled steel sheet at 950°C (at which the <100>//ND orientation, which is favorable to magnetism, develops best) for a certain period of time. As a result, it could be confirmed that, compared to those in the existing continuous cooling condition, the <100>//ND orientation, which is favorable to magnetism, increased by 20%, and the <112>//ND orientation, which is unfavorable to magnetism, decreased by 32.6%. The core of the present invention can be said to be a non-oriented electrical steel sheet and a method for manufacturing a non-oriented electrical steel sheet, which improves the texture on the basis of phase transformation by inducing nucleation in a specific temperature range in which the <100>/ND orientation, which is favorable to magnetism, develops best during the phase transformation from the austenite phase (γ) to the ferrite phase (a), and growing the same.

Simple modifications or variations of the present invention may be easily carried out by those skilled in the art, and all such modifications or variations can be considered included in the scope of the present invention.

## Claims

1. A method for manufacturing a non-oriented electrical steel sheet, comprising steps of:
manufacturing a hot-rolled steel sheet from a slab comprising 0.4 to 3.5 wt% of silicon (Si), more than 0 to 0.05 wt% or less of aluminum (Al), 0.002 to 3.5 wt% of austenite stabilizing elements, and a balance of iron (Fe) and other inevitable impurities;
cold-rolling the hot-rolled steel sheet, thereby manufacturing a cold-rolled steel sheet; and
annealing the cold-rolled steel sheet,
wherein the step of annealing the cold-rolled steel sheet comprises:
a step of subjecting the cold-rolled steel sheet to first heat treatment by heating to an austenite single-phase region temperature and maintaining at the temperature; and
a step of subjecting the cold-rolled steel sheet, subjected to the first heat treatment, to second heat treatment by cooling to a ferrite/austenite dual-phase region temperature and maintaining at the temperature.

2. The method of claim 1, wherein the slab further comprises at least one of carbon (C): more than 0 to 0.0050 wt% or less, sulfur (S): more than 0 to 0.0050 wt% or less, nitrogen (N): more than 0 to 0.0050 wt% or less, and titanium (Ti): more than 0 to 0.0050 wt% or less, based on the total weight.

3. The method of claim 1, wherein the hot-rolled steel sheet is manufactured through steps of:
reheating the slab at a reheating temperature of 1,110 to 1,180°C;
hot-rolling the reheated slab at a finish rolling temperature of 800 to 900°C; and
coiling the hot-rolled slab at a coiling temperature of 500 to 700°C.

4. The method of claim 1, further comprising, before the step of cold-rolling the hot-rolled steel sheet, a step of annealing the hot-rolled steel sheet,
wherein the step of annealing the hot-rolled steel sheet comprises:
a step of heating the hot-rolled steel sheet to a temperature of 940 to 1,110°C and maintaining the same at the temperature; and
a step of cooling the hot-rolled steel sheet.

5. The method of claim 4, wherein the step of annealing the hot-rolled steel sheet is performed by heating the hot-rolled steel sheet at a heating rate of 20°C/s or higher and cooling the same at a cooling rate of 20°C/s or higher.

6. The method of claim 1, wherein the cold rolling is performed at a reduction ratio of 50 to 90%, and the cold-rolled steel sheet has a thickness of 0.1 to 0.5 mm.

7. The method of claim 1, wherein the first heat treatment comprises a step of heating the cold-rolled steel sheet to a temperature of 1,000 to 1,250°C and maintaining the same at the temperature for 30 to 300 seconds, and
the second heat treatment comprises a step of cooling the cold-rolled steel sheet, subjected to the first heat treatment, to a ferrite/austenite dual-phase region temperature and maintaining the same at the temperature for 5 to 300 seconds.

8. The method of claim 7, wherein the second heat treatment is performed by cooling the cold-rolled steel sheet, subjected to the first heat treatment, at a cooling rate of 10°C/s or higher.

9. A non-oriented electrical steel sheet comprising 0.4 to 3.5 wt% of silicon (Si), more than 0 to 0.05 wt% or less of aluminum (Al), 0.002 to 3.5 wt% of austenite stabilizing elements, and a balance of iron (Fe) and other inevitable impurities,
wherein a microstructure of the non-oriented electrical steel sheet includes ferrite.

10. The non-oriented electrical steel sheet of claim 9, further comprising at least one of carbon (C): more than 0 to 0.0050 wt% or less, sulfur (S): more than 0 to 0.0050 wt% or less, nitrogen (N): more than 0 to 0.0050 wt% or less, and titanium (Ti): more than 0 to 0.0050 wt% or less, based on the total weight.

11. The non-oriented electrical steel sheet of claim 9, wherein the non-oriented electrical steel sheet has a thickness of 0.1 to 0.5 mm, a magnetic flux density (B₅₀) of 1.65 T or higher, an iron loss (W_{15/50}) of 2.42 W/kg or less, a yield strength of 200 MPa or higher, and a tensile strength of 300 MPa or higher.

12. The non-oriented electrical steel sheet of claim 9, wherein the non-oriented electrical steel sheet comprises 15 area% or more of a <100>//ND texture.
